(19) Europäisches Patentamt
European Patent Office
Office européen des brevets

(11) Veröffentlichungsnummer: **0 123 996**
**A1**

# (12) EUROPÄISCHE PATENTANMELDUNG

(21) Anmeldenummer: **84104239.3**

(22) Anmeldetag: **14.04.84**

(51) Int. Cl.³: **C 07 C 103/37**, C 07 C 103/375, C 07 C 103/38, A 01 N 37/18 // C07C119/12

(30) Priorität: **29.04.83 DE 3315601**

(43) Veröffentlichungstag der Anmeldung: **07.11.84**
**Patentblatt 84/45**

(84) Benannte Vertragsstaaten: **BE CH DE FR GB IT LI NL**

(71) Anmelder: **BAYER AG, Konzernverwaltung RP**
**Patentabteilung, D-5090 Leverkusen 1 Bayerwerk (DE)**

(72) Erfinder: **Thomas, Rudolf, Dr., Dellbusch 269,**
**D-5600 Wuppertal 2 (DE)**
Erfinder: **Stetter, Jörg, Dr., Gellertweg 4,**
**D-5600 Wuppertal 1 (DE)**
Erfinder: **Weber, Erhard, Dr., Claudiusweg 9,**
**D-5600 Wuppertal 1 (DE)**
Erfinder: **Eue, Ludwig, Dr., Paul-Klee-Strasse 36,**
**D-5090 Leverkusen 1 (DE)**
Erfinder: **Schmidt, Rudolf, R., Dr., Im Waldwinkel 110,**
**D-5060 Bergisch-Gladbach 2 (DE)**

(54) **N-Cyclohexadienyl-chloracetamide.**

(57) Neue N-Cyclohexadienyl-chloracetamide der Formel

$R^1$-N-CO-$CH_2$-Cl (I)
|
$R^2$

in welcher

$R^1$ für die Reste

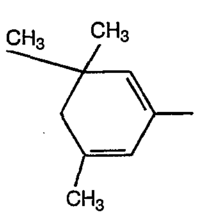,
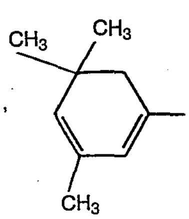 und
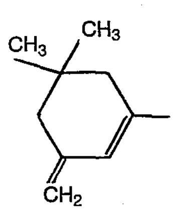

steht und

$R^2$ für Methyl, Ethyl, n-Propyl, iso-Propyl, n-, iso-, sek.- oder tert.-Butyl, Allyl, Cyclohexyl, 2,2-Dimethoxyethyl, 2-Methoxyethyl, 2,2,2-Trifluorethyl, 1,1,1-Trifluor-prop-2-yl oder 3,3,3-Trifluorprop-1-yl steht,

ein Verfahren zur Herstellung dieser Stoffe und deren Verwendung als Herbizide.

Neue Azomethine der Formel

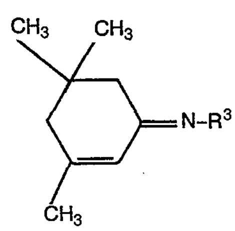

(IIa)

in welcher

$R^3$ für 2,2,2-Trifluorethyl, 1,1,1-Trifluor-prop-2-yl oder 3,3,3-Trifluor-prop-1-yl steht,

und ein Verfahren zur Herstellung dieser Stoffe, die als Zwischenprodukte zur Synthese von N-Cyclohexadienyl-chloracetamiden der Formel (I) dienen.

EP 0 123 996 A1

BAYER AKTIENGESELLSCHAFT 5090 Leverkusen, Bayerwerk
Konzernverwaltung RP
Patentabteilung Dü/by-c
Ia

N-Cyclohexadienyl-chloracetamide

Die Erfindung betrifft neue N-Cyclohexadienyl-chloracetamide, ein Verfahren zur Herstellung dieser Stoffe und ihre Verwendung als Herbizide.

Es ist bereits bekannt geworden, daß zahlreiche Halogenacetamide herbizide Eigenschaften besitzen (vgl. DE-OS 28 56 651 und US-PS 3 586 496). So kann zum Beispiel das N-(3,5,5-Trimethyl-cyclohex-1-enyl)-N-isopropyl-chloracetamid zur Bekämpfung von Unkraut verwendet werden. Die Wirksamkeit dieses Stoffes ist gut, die Verträglichkeit gegenüber einigen wichtigen Kulturpflanzen ist jedoch nicht immer zufriedenstellend.

Es wurden nun neue N-Cyclohexadienyl-chloracetamide der Formel

$$R^1-\underset{\underset{R^2}{|}}{N}-CO-CH_2-Cl \qquad (I)$$

in welcher

$R^1$ für die Reste 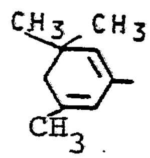 , 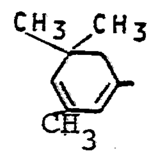 und 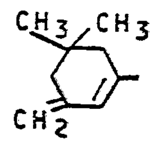

steht und

$R^2$ für Methyl, Ethyl, n-Propyl, iso-Propyl, n-, iso-, sek.- oder tert.-Butyl, Allyl, Cyclohexyl, 2,2-Dimethoxyethyl, 2-Methoxyethyl, 2,2,2-Trifluorethyl, 1,1,1-Trifluor-prop-2-yl oder 3,3,3-Trifluor-prop-1-yl steht,

gefunden.

Weiterhin wurde gefunden, daß man die neuen N-Cyclohexadienyl-chloracetamide der Formel (I) erhält, wenn man Azomethine der Formel

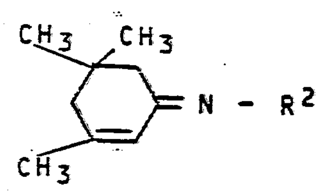 (II)

in welcher

$R^2$ die oben angegebene Bedeutung hat,

mit Chloracetylhalogeniden der Formel

$$Cl - CH_2 - CO - X \qquad (III)$$

in welcher

X für Halogen steht,

gegebenenfalls in Gegenwart eines Verdünnungsmittels und gegebenenfalls in Gegenwart eines Säurebindemittels umsetzt.

Außerdem wurde gefunden, daß die neuen N-Cyclohexadienylchloracetamide der Formel (I) sehr gute herbizide, insbesondere selektiv-herbizide Eigenschaften besitzen.

Überraschenderweise zeigen die erfindungsgemäßen N-Cyclohexadienyl-chloracetamide der Formel (I) gegenüber dem bekannten N-(3,5,5-Trimethylcyclohex-1-enyl)-N-isopropylchloracetamid, welches ein konstitutionell ähnlicher Stoff gleicher Wirkungsart ist, bei vergleichbar guter allgemeinherbizider Wirkung eine bessere Verträglichkeit gegenüber einigen wichtigen Kulturpflanzen und damit bessere Möglichkeiten zum Einsatz als selektive Unkrautbekämpfungsmittel.

Verwendet man beispielsweise Methyl-(3,5,5-trimethylcyclohex-2-enyliden)-amin und Chloracetylchlorid als Ausgangsstoffe, so kann der Reaktionsablauf nach dem erfindungsgemäßen Verfahren durch das folgende Formelschema wiedergegeben werden:

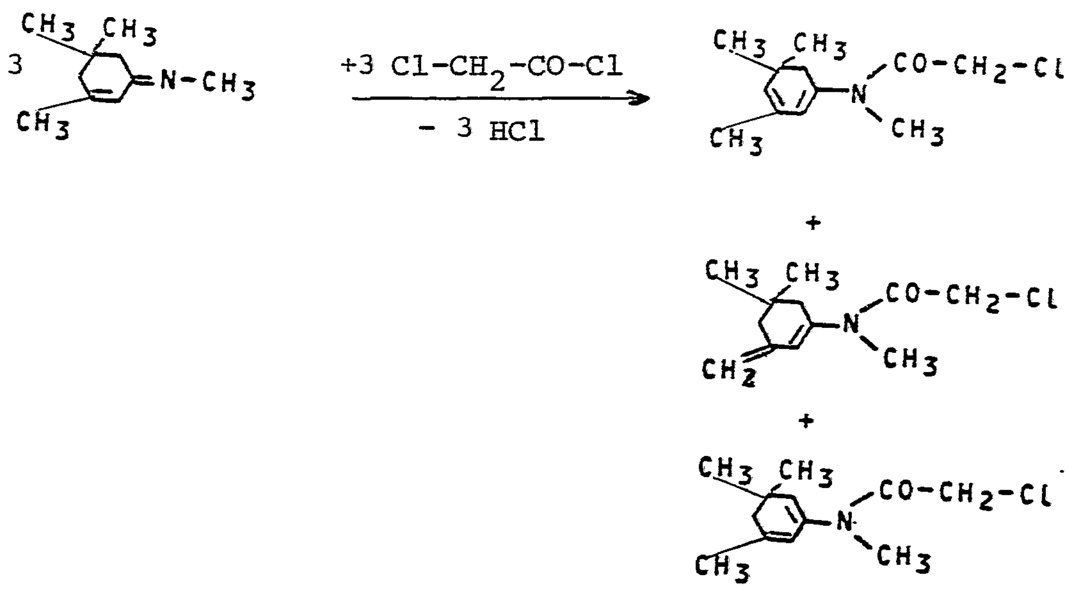


Die bei dem erfindungsgemäßen Verfahren als Ausgangsstoffe benötigten Azomethine sind durch die Formel (II) allgemein definiert. In dieser Formel steht $R^2$ für diejenigen Reste, die bereits im Zusammenhang mit der Beschreibung der erfindungsgemäßen Stoffe der Formel (I) für diesen Substituenten genannt wurden.

Die Azomethine der Formel (II) sind teilweise bekannt (vgl. J. Amer. Chem. Soc. 75, 3316 (1953), J. Org. Chem. 19, 1054 (1954) und US-PS 1 535 922).

Die Azomethine der Formel

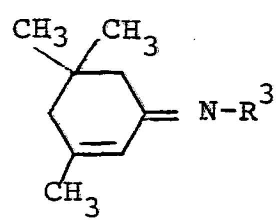

(IIa)

in welcher

$R^3$ für 2,2,2-Trifluorethyl, 1,1,1-Trifluorprop-2-yl oder 3,3,3-Trifluor-prop-1-yl steht,

sind neu.

Diese neuen Azomethine der Formel (IIa) lassen sich herstellen, indem man Isophoron der Formel

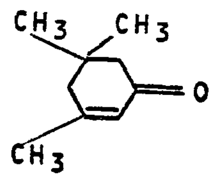

(IV)

mit Aminen der Formel

$$H_2N - R^3 \qquad (V)$$

in welcher

$R^3$ die oben angegebene Bedeutung hat,

gegebenenfalls in Gegenwart eines Verdünnungsmittels, wie beispielsweise Benzol, und gegebenenfalls in Gegenwart eines Katalysators, wie beispielsweise p-Toluolsulfonsäure, bei Temperaturen zwischen 20 und 130°C umsetzt.

Die bei dem erfindungsgemäßen Verfahren weiterhin als Ausgangsstoffe benötigten Chloracetylhalogenide sind durch die Formel (III) allgemein definiert. In dieser Formel steht X vorzugsweise für Chlor oder Brom.

Die Chloracetylhalogenide der Formel (III) sind allgemein bekannte Verbindungen der organischen Chemie.

Als Verdünnungsmittel kommen für das erfindungsgemäße Verfahren inerte organische Lösungsmittel in Frage. Vorzugsweise verwendbar sind Ketone, wie Aceton und Methylethylketon; Nitrile, wie Acetonitril; Ether, wie Tetrahydrofuran oder Dioxan; Ester, wie Essigester, halogenierte Kohlenwasserstoffe, wie Methylenchlorid; sowie insbesondere aromatische Kohlenwasserstoffe, wie Benzol und Toluol.

Die Halogenwasserstoffeleminierung im Verlauf des erfindungsgemäßen Verfahrens kann gegebenenfalls in Gegenwart einer Base als Säureakzeptor durchgeführt werden.

Als Basen können hierbei alle üblicherweise für derartige Umsetzungen geeigneten Säureakzeptoren eingesetzt werden. Vorzugsweise verwendbar sind Alkalicarbonate, wie Natrium- und Kaliumcarbonat oder Natriumhydrogencarbonat; ferner niedere tertiäre Alkylamine, Aralkylamine, aromatische Amine oder Cycloalkylamine, wie z.B. Triethylamin, Dimethylbenzylamin, Pyridin, 1,5-Diazabicyclo-[4,3,0]-non-5-en (DBN) und 1,8-Diazabicyclo-[5,4,0]-undec-7-en (DBU). Es ist aber auch möglich, einen entsprechenden Überschuß an Azomethin der Formel (II) einzusetzen.

Auf die Verwendung einer Base als Säureakzeptor kann jedoch auch verzichtet werden. In diesem Fall treibt man

die Halogenwasserstoffsäure durch Verkochen aus dem Reaktionsgemisch.

Die Reaktionstemperaturen können bei der Durchführung des erfindungsgemäßen Verfahrens innerhalb eines größeren Bereiches variiert werden. Im allgemeinen arbeitet man bei Temperaturen zwischen -20°C und +150°C, vorzugsweise zwischen -10°C und +100°C.

Das erfindungsgemäße Verfahren wird im allgemeinen bei Normaldruck durchgeführt. Es ist jedoch auch möglich, bei erhöhtem oder vermindertem Druck zu arbeiten.

Bei der Durchführung des erfindungsgemäßen Verfahrens setzt man die Ausgangsstoffe der Formeln (II) und (III) vorzugsweise in äquivalenten Mengen ein. Es ist jedoch auch möglich, eine der beiden Komponenten, insbesondere das Azomethin der Formel (II), in einem größeren Überschuß zu verwenden.

Die Isolierung der Endprodukte erfolgt bei dem erfindungsgemäßen Verfahren nach üblichen Methoden.

Bei der Herstellung der N-Cyclohexadienyl-chloracetamide nach dem erfindungsgemäßen Verfahren fallen diese Stoffe im allgemeinen als Gemisch der drei Strukturisomeren der Formeln

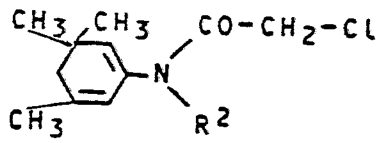

(Ia)

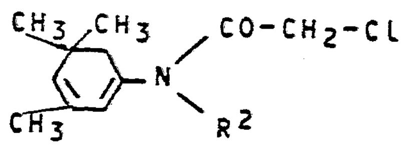

(Ib)

und

(Ic)

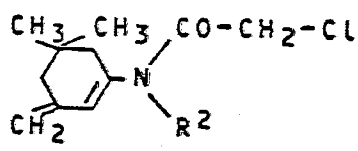

an.

Die Strukturisomeren der Formeln (Ia), (Ib) und (Ic) die sich nur durch die Lage der Doppelbindungen im Molekül unterscheiden, lassen sich für analytische Zwecke sowohl durch Kapillargaschromatographie als auch durch Hochdruck-Flüssigkeitschromatographie trennen. Für präparative Zwecke gelingt eine Trennung durch Hochdruck-Flüssigkeitschromatographie.

Die getrennten Isomeren lassen sich durch ihre UV-Spektren und ihre $^{1}H$-Kernresonanzspektren eindeutig charakterisieren und in ihrer Struktur zuordnen.

Die reinen Komponenten der Formeln (Ia), Ib) und (Ic) isomerisieren in Lösung, - bevorzugt unter Säurekatalyse -, zu einem Gemisch der drei Isomeren. Auch bei Gemischen mit unterschiedlicher Zusammensetzung an Verbindungen der Formeln (Ia), (Ib) und/oder (Ic) stellt sich in Lösung durch Isomerisierung ein Gleichgewicht ein.

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst-, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäßen Wirkstoffe zeigen neben einer sehr guten allgemeinen herbiziden Wirkung eine gute Verträglichkeit gegenüber Kulturpflanzen. So ist es möglich, wichtige Schadpflanzen in Kulturen von Baumwolle,

Erdnüssen, Kartoffeln, Raps, Sojabohnen, Zuckerrüben, Getreide, Mais, Reis und Sorghum selektiv zu bekämpfen.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z. B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide wie z.B. 1-Amino-6-ethylthio-3-(2,2-dimethylpropyl)-1,3,5-triazin-2,4(1H,3H)-dion oder N-(2-Benzthiazolyl)-N,N'-dimethyl-harnstoff zur Unkrautbekämpfung in Getreide; 4-Amino-3-methyl-6-phenyl-1,2,4-triazin-5(4H)-on zur Unkrautbekämpfung in Zuckerrüben und 4-Amino-6-(1,1-dimethylethyl)-3-methylthio-1,2,4-triazin-5(4H)-on zur Unkrautbekämpfung in Sojabohnen, in Frage. Ferner kommen als Mischpartner auch 3-(3,4-Dichlorphenyl)-1,1-dimethyl-harnstoff, N-(3-Trifluormethylphenyl)-1,1-dimethyl-harnstoff und 2-Chlor-4-ethyl-amino-6-isopropylamino-1,3,5-triazin in Frage. Einige Mischungen zeigen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,1 und 10 kg Wirkstoff pro Hektar Bodenfläche, vorzugsweise zwischen 0,25 und 5 kg pro ha.

Die Herstellung und die Verwendung der erfindungsgemäßen Wirkstoffe geht aus den nachfolgenden Beispielen hervor.

Herstellungsbeispiele

Beispiel (I-1)

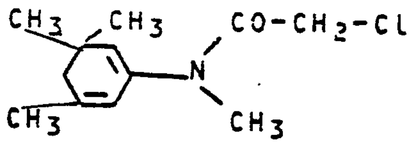

+

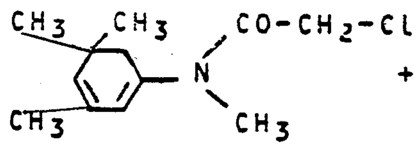

+

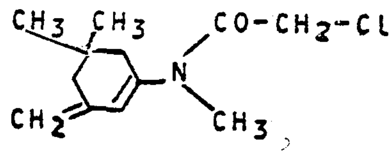

Zu einer Lösung von 151 g (1 Mol) N-Methyl-N-(3,5,5-trimethyl-cyclohex-2-enyliden)-amin und 101 g (1 Mol) Triethylamin tropfte man unter Rühren und Kühlung eine Lösung von 113 g (1 Mol) Chloracetylchlorid in 200 ml Toluol hinzu, so daß die Temperatur der Reaktionsmischung 35°C nicht überstieg. Nach beendeter Zugabe rührte man weitere 3 Stunden bei Raumtemperatur nach, filtrierte dann das ausgefallene Triethylaminhydrochlorid ab und wusch mit Toluol nach. Die vereinigten Filtrate wurden mit wäßriger Natriumhydrogencarbonatlösung und mit Wasser gewaschen, über Natriumsulfat getrocknet und im Vakuum eingedampft. Der Rückstand wurde unter Zusatz von Aktivkohle aus n-Hexan umkristallisiert. Man erhielt 176 g (77,3 % der Theorie) eines Gemisches aus N-Methyl-(3,5,5-trimethylcyclohexa-1,3-dien-1-yl)-chloracetamid, N-Methyl-N-(3,3,5-trimethylcyclohexa-1,5-dien-1-yl)-chloracetamid und

N-Methyl-N-(5,5-dimethyl-3-methylen-cyclohex-1-en-1-yl)-chloracetamid in Form blaßgelber Kristalle vom Schmelzpunkt 53°C.

Das Gemisch ließ sich mittels Hochdruck-Flüssigkeitschromatographie unter folgenden Bedingungen in seine Einzelkomponenten auftrennen:

Säule: 250 x 21 mm, Kieselgel (ZORBAXSIL (R))
Fluß: 18 ml/min.
Laufmittel: Hexan - Dichlormethan - Essigsäureethylester (60:40:2)

Man erhielt in der Reihenfolge ihrer Elution zunächst N-Methyl-N-/3,5,5-trimethylcyclohexa-1,3-dien-1-yl7-chloracetamid der Formel

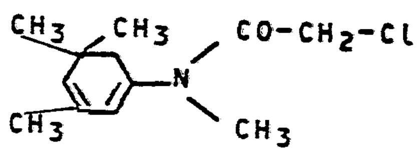

(1 b)

vom Schmelzpunkt 75-76°C.

UV *) $\lambda$ max.: 273 nm : 5640 (Acetonitril)

---

*) Vergl. J. Amer. Chem. Soc. 78, 3776 (1956):

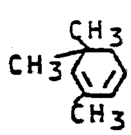

UV: $\lambda$ max.: 260 nm $\varepsilon$ : 4150 (Ethanol)

$^{1}H$-NMR (250 mHz, $CDCl_3$, TMS):

$\delta$ (ppm): 1,07 (s, 6H, 2 $CH_3$)

1,77 (d, J=0,5 Hz, 3 H, 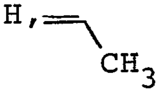 )

2,17 (d, J=0,5 Hz, 2 H, 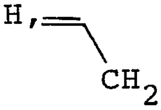 )

3,08 (s, 3H, N-$CH_3$)

4,14 (s, 2H, $CH_2$-Cl)

5,30 (s, 1H, 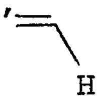 )

5,77 (s, 1H, 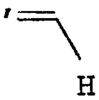 )

Dann erhielt man N-Methyl-N-(5,5-dimethyl-3-methylen-cyclohex-1-en-1-yl)-chloracetamid der Formel

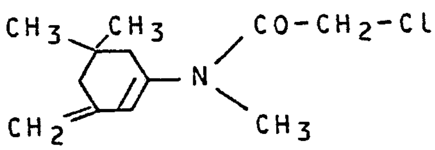

(1 c)

vom Schmelzpunkt 64°C.

UV*) : $\lambda$ max: 239 nm $\varepsilon$ : 14040 (Acetonitril

---

*) Vergl. J. Amer. Chem. Soc. 78, 3776 (1956)

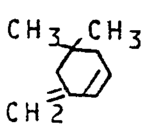 UV: $\lambda$ max: 231 nm $\varepsilon$ : 15400 (Ethanol)

$^1$H-NMR (250 MHz, $CDCl_3$, TMS):

δ ppm: 1,01 (s, 6H, 2 $CH_3$)
2,08 (s, 2H, 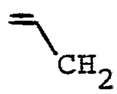 )
2,13 (s, 2H, 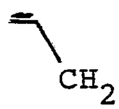 )
3,07 (s, 3H, N-$CH_3$)
4,11 (s, 2H, $CH_2$-Cl)
5,01 (s, 2H, 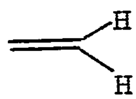 )
6,15 (s, 1H, 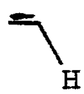 )

Schließlich erhielt man N-Methyl-N-(3,3,5-trimethylcyclohexa-1,5-dien-1-yl)-chloracetamid der Formel

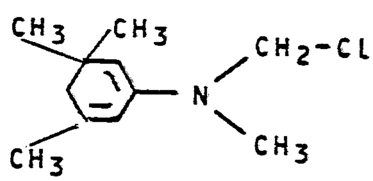

(1 a)

vom Schmelzpunkt 44°C.

UV*) max: 264 nm : 4400 (Acetonitril)

---

*) Vergl. J. Amer. Chem. Soc. 78, 3776 (1956)

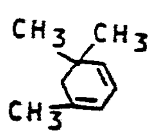 UV: max: 261 nm, : 6200 (Ethanol)

$^1$H-NMR (250 MHz, $CDCl_3$, TMS):

δ (ppm): 1,07 (s, 6H, 2 $CH_3$)

1,85 (s, 3H, 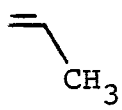 )

2,07 (s, 2H, 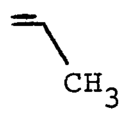 )

3,06 (s, 3H, N-$CH_3$)

4,09 (s, 2H, $CH_2$-Cl)

5,34 (s, 1H, 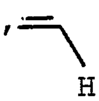 )

5,50 (s, 1H, 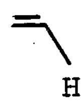 )

Die Isomeren der Formeln (1a), (1b) und (1c) sind in der oben beschriebenen Gleichgewichtsmischung vom Schmelzpunkt 53°C im Verhältnis

(1a) = 58 %
(1b) = 23 %
(1c) = 19 %

enthalten. Die Gehaltsbestimmung erfolgte durch Kapillargaschromatographie (Säule: 20 m x 0,3 mm, OV 1701 Glaskapillare; Trägergas: Helium, Vordruck 70 kPa, Temperatur: 130°C, Detektor: FID; Auswertung: Flächenprozente).

Beispiel (I-2)

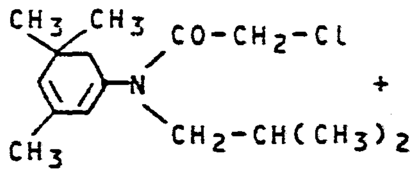

+

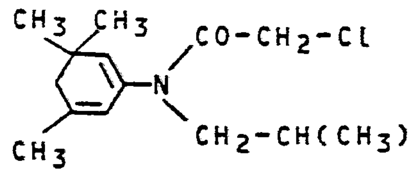

+

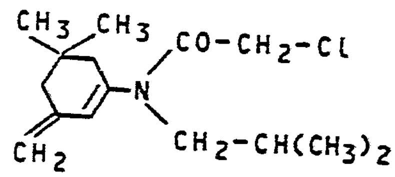

Zu einer Lösung von 113 g (1 Mol) Chloracetylchlorid in 200 ml Toluol tropfte man unter Kühlung und Rühren 387 g (2 Mol) N-Isobutyl-N-(3,5,5-trimethylcyclohex-2-enyliden)-amin so hinzu, daß die Temperatur der Reaktionsmischung 35°C nicht überstieg. Nach beendeter Zugabe rührte man weitere 3 Stunden bei Raumtemperatur nach, filtrierte dann das ausgefallene Hydrochlorid ab und wusch mit Toluol nach. Die vereinigten Filtrate wurden mit wäßriger Natriumhydrogencarbonatlösung und mit Wasser gewaschen, über Natriumsulfat getrocknet und im Vakuum eingedampft. Der Rückstand wurde unter Zusatz von Aktivkohle aus n-Hexan umkristallisiert. Man erhielt 192 g (71 % der Theorie) reines Gemisch aus N-Isobutyl-N-(3,5,5-trimethylcyclohexa-1,3-dien-1-yl)-chloracetamid, N-Isobutyl-(3,5,5-trimethylcyclohexa-1,5-dien-1-yl)-chloracetamid und N-Isobutyl-(5,5-dimethyl-3-methylen-cyclohex-1-en-1-yl)-chloracetamid in Form hellgelber Kristalle vom Schmelzpunkt 53°C.

In entsprechender Weise erhielt man die folgenden Wirkstoffgemische der Formel

$$\underset{\displaystyle R^2}{R^1\text{-}\overset{}{N}}\text{-CO-}CH_2\text{-Cl} \qquad \text{(I)}$$

$R^1$ ist jeweils 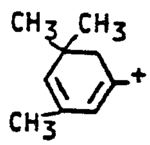 + 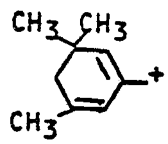 + 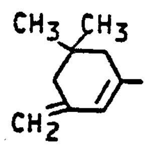

Tabelle 1

| Bsp. Nr. | $R^2$ | physikalische Eigenschaften |
|---|---|---|
| I-3 | $C_2H_5$ | |
| I-4 | $CH_3-(CH_2)_2-$ | |
| I-5 | $(CH_3)_2CH-$ | |
| I-6 | $CH_3-(CH_2)_3-$ | |
| I-7 | $(CH_3)_3C-$ | |
| I-8 | $CH_2=CH-CH_2-$ | zähflüssiges Öl |
| I-9 | 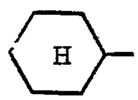 | zähflüssiges Öl |
| I-10 | $(CH_3O)_2CH-CH_2-$ | |
| I-11 | $CH_3O-CH_2-CH_2-$ | |
| I-12 | $F_3C-CH_2-$ | Kp: 96°C/0,01 mbar |
| I-13 | 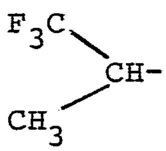 | |
| I-14 | $F_3C-(CH_2)_2-$ | |

Herstellung der Ausgangsverbindungen:

Beispiel (II-1)

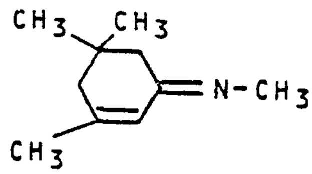

(II-1)

In eine Lösung von 138,2 g (1 Mol) Isophoron und 0,5 g p-Toluolsulfonsäure in 500 ml Toluol leitete man zunächst 12 g (0,39 Mol) Methylamin ein und kochte am Wasserabscheider, bis die abgeschiedene Wassermenge konstant blieb. Nach dem Abkühlen der Reaktionsmischung auf Raumtemperatur leitete man erneut 12 g (0,39 Mol) Methylamin ein und wiederholte das oben beschriebene Verfahren bis kein weiteres Reaktionswasser mehr gebildet wurde, wozu insgesamt 50 g (1,6 Mol) Methylamin benötigt wurden. Zur Aufarbeitung destillierte man zunächst das Lösungsmittel ab und fraktionierte dann den Rückstand im Hochvakuum. Man erhielt 95,2 g (63 % der Theorie) an N-Methyl-N-(3,5,5-trimethyl- cyclohex-2-enyliden)-amin vom Siedepunkt 45°C bei 0,2 mbar.

Beispiel (II-2)

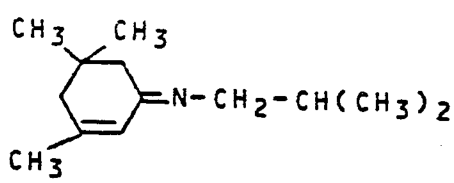

(II-2)

Eine Lösung von 138,2 g (1 Mol) Isophoron, 73,1 g (1 Mol) Isobutylamin, 0,5 g p-Toluolsulfonsäure und 400 ml Cyclohexan kochte man am Wasserabscheider bis die abgeschiedene Wassermenge konstant blieb. Zur Aufarbeitung destillierte man zunächst das Lösungsmittel ab und fraktionierte dann den Rückstand im Hochvakuum. Man erhielt 156,3 g (81 % der Theorie) an N-Isobutyl-N-(3,5,5-trimethylcyclohex-2-enyliden)-amin vom Siedepunkt 63°C bei 0,3 mbar.

Beispiel (II-3)

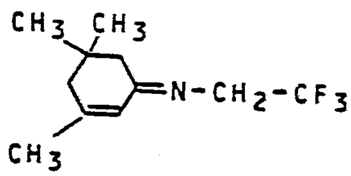

(II-3)

28 g (0,2 Mol) Isophoron und 20 g (0,2 Mol) 2,2,2-Trifluorethylamin wurden unter Zugabe von 0,5 g p-Toluolsulfonsäure in 200 ml Benzol 16 Stunden über einem Wasserabscheider unter Rückfluß gekocht. Zur Aufarbeitung entfernte man das Lösungsmittel im Vakuum und destillierte den Rückstand ebenfalls im Wasserstrahlvakuum. Man erhielt 21 g (48 % der Theorie) an N-(2,2,2-Trifluorethyl)-N-(3,5,5-trimethylcyclohex-2-enyliden)-amin vom Siedepunkt 100°C bei 16 mbar.

In entsprechender Weise erhielt man die folgenden Verbindungen der Formel

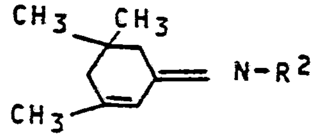

(II)

Tabelle 2

| Bsp. Nr. | $R^2$ | Siedepunkt/mbar |
|---|---|---|
| II-4 | $CH_2=CH-CH_2-$ | 77°C/0,3 |
| II-5 | 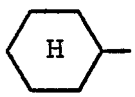 | 83°C/0,1 |
| II-6 | $(CH_3O)_2CH-CH_2-$ | 75°C/0,05 |
| II-7 | 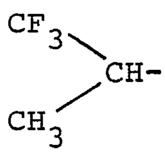 | |
| II-8 | $F_3C-(CH_2)_2-$ | |

Anwendungsbeispiele

In dem nachfolgenden Anwendungsbeispiel wurde die nachstehend angegebene Verbindung als Vergleichssubstanz eingesetzt:

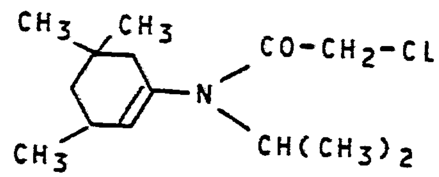

(A)

N-Isopropyl-N-(3,5,5-trimethylcyclohex-1-enyl)-chloracetamid
(bekannt aus DE-OS 28 56 651).

Beispiel A

Pre-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

Das erfindungsgemäße Substanzgemisch gemäß Beispiel (I-1) zeigt bei der Bekämpfung von Unkräutern in Mais und Sojabohnen bei einer Aufwandmenge von 2 kg/ha eine nahezu vollständige Vernichtung von Echinochloa, Setaria,

Alopecurus und Poa und keinerlei Schäden an den Kulturpflanzen, während die Vergleichssubstanz (A) bei gleich guter herbizider Wirksamkeit starke Schäden an den Kulturpflanzen verursacht.

Patentansprüche

1. N-Cyclohexadienyl-chloracetamide der Formel

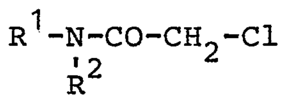 (I)

in welcher

$R^1$ für die Reste 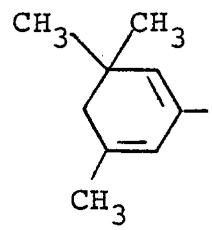 , 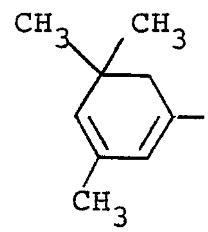 und 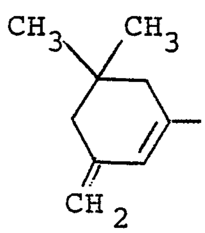 steht und

$R^2$ für Methyl, Ethyl, n-Propyl, iso-Propyl, n-, iso-, sek.- oder tert.-Butyl, Allyl, Cyclohexyl, 2,2-Dimethoxyethyl, 2-Methoxyethyl, 2,2,2-Trifluorethyl, 1,1,1-Trifluor-prop-2-yl oder 3,3,3-Trifluor-prop-1-yl steht.

2. Verbindungen gemäß Anspruch 1, gekennzeichnet durch die Formeln

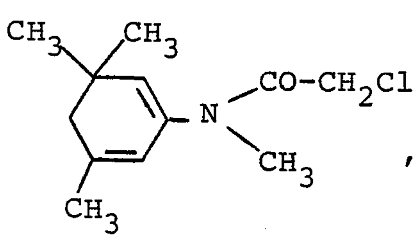 , 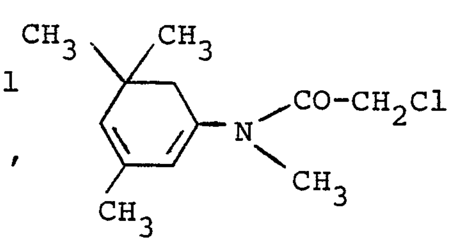 und

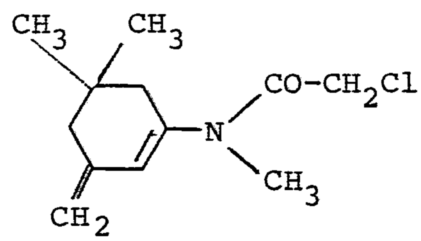 .

3. Verfahren zur Herstellung von N-Cyclohexadienyl-chloracetamiden der Formel

$$R^1-\underset{\substack{| \\ R^2}}{N}-CO-CH_2-Cl \qquad (I)$$

in welcher

$R^1$ für die Reste 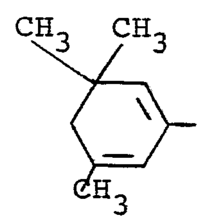 , 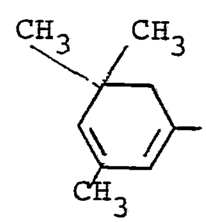

und 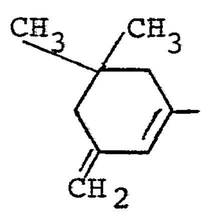

steht und

$R^2$ für Methyl, Ethyl, n-Propyl, iso-Propyl, n-, iso-, sek.- oder tert.-Butyl, Allyl, Cyclohexyl, 2,2-Dimethoxyethyl, 2-Methoxyethyl, 2,2,2-Trifluorethyl, 1,1,1-Trifluorprop-2-yl oder 3,3,3-Trifluor-prop-1-yl steht,

dadurch gekennzeichnet, daß man Azomethine der Formel

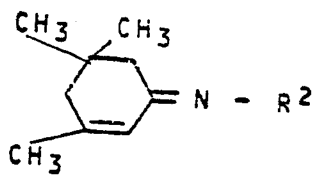

(II)

in welcher

$R^2$ die oben angegebene Bedeutung hat,

mit Chloracetylhalogeniden der Formel

$$Cl\text{-}CH_2\text{-}CO\text{-}X \qquad (III)$$

in welcher

X für Halogen steht,

gegebenenfalls in Gegenwart eines Verdünnungsmittels und gegebenenfalls in Gegenwart eines Säurebindemittels umsetzt.

4. Herbizide Mittel, gekennzeichnet durch einen Gehalt an mindestens einem N-Cyclohexadienyl-chloracetamid der Formel (I).

5. Verwendung von N-Cyclohexadienyl-chloracetamiden der Formel (I) zur Bekämpfung von Unkräutern.

6. Verfahren zur Bekämpfung von Unkräutern, dadurch gekennzeichnet, daß N-Cyclohexadienyl-chloracetamide der Formel (I) auf die Unkräuter und/oder deren Lebensraum ausbringt.

7. Verfahren zur Herstellung von herbiziden Mitteln, dadurch gekennzeichnet, daß man N-Cyclohexadienyl-chloracetamide der Formel (I) mit Streckmitteln und/oder oberflächenaktiven Stoffen vermischt.

8. Azomethine der Formel

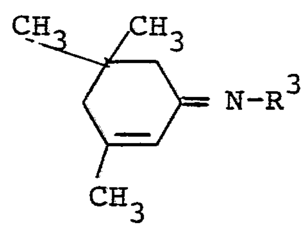

(IIa)

in welcher

$R^3$ für 2,2,2-Trifluorethyl, 1,1,1-Trifluor-prop-2-yl oder 3,3,3-Trifluor-prop-1-yl steht.

9. Verfahren zur Herstellung von Azomethinen der Formel

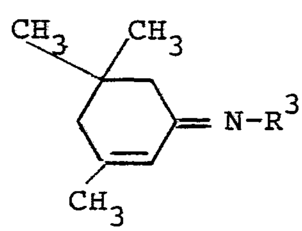

(IIa)

in welcher

$R^3$ für 2,2,2-Trifluorethyl, 1,1,1-Trifluor-prop-2-yl oder 3,3,3-Trifluor-prop-1-yl steht,

dadurch gekennzeichnet, daß man Isophoron der Formel

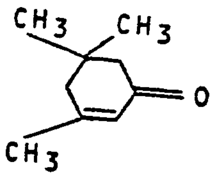

(IV)

mit Aminen der Formel

$$H_2N - R^3 \quad (V)$$

in welcher

$R^3$ die oben angegebene Bedeutung hat,

gegebenenfalls in Gegenwart eines Verdünnungsmittels und gegebenenfalls in Gegenwart eines Katalysators umsetzt.

Europäisches Patentamt

# EUROPÄISCHER RECHERCHENBERICHT

0123996

Nummer der Anmeldung

EP 84 10 4239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 574 746 (CHUPP) * Spalte 1, Zeile 15 - Spalte 3, Zeile 34; Spalte 5, Zeilen 25-58; Beispiel 10 * | 1-9 | C 07 C 103/37<br>C 07 C 103/375<br>C 07 C 103/38<br>A 01 N 37/18 //<br>C 07 C 119/12 |
| D,X | EP-A-0 013 429 (CHEMISCHE WERKE HÜLS AG) * Seite 3, Zeile 11 - Seite 5, Zeile 18; Seiten 9,11,14,15,18,19; Beispiele 52,53,65; Seiten 29,32 * | 1-9 | |

RECHERCHIERTE SACHGEBIETE (Int. Cl. 3)

C 07 C 103/00

Der vorliegende Recherchenbericht wurde für alle Patentansprüche erstellt.

| Recherchenort | Abschlußdatum der Recherche | Prüfer |
|---|---|---|
| DEN HAAG | 27-07-1984 | PAUWELS G.R.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument